(19)

Europäisches
Patentamt

European
Patent Office

Office européen
des brevets

(11)　　**EP 2 697 954 B1**

(12)　　　　　　　**EUROPEAN PATENT SPECIFICATION**

(45) Date of publication and mention
of the grant of the patent:
**21.01.2015　Bulletin 2015/04**

(21) Application number: **12769648.2**

(22) Date of filing: **03.10.2012**

(51) Int Cl.:
***H04L 29/08*** *(2006.01)*

(86) International application number:
**PCT/EP2012/069509**

(87) International publication number:
**WO 2013/050400 (11.04.2013 Gazette 2013/15)**

(54) **METHOD AND DEVICE FOR ARRANGING PEERS IN A LIVE STREAMING P2P NETWORK**

VERFAHREN UND VORRICHTUNG ZUR ANORDNUNG VON PEERS IN EINEM LIVESTREAMING-
P2P-NETZWERK

PROCÉDÉ ET DISPOSITIF D'AGENCEMENT DE PAIRS DANS UN RÉSEAU P2P DE DIFFUSION
EN CONTINU EN DIRECT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.10.2011　SE 1150920
05.10.2011　US 201113253302**

(43) Date of publication of application:
**19.02.2014　Bulletin 2014/08**

(73) Proprietor: **Peerialism AB
102 45 Stockholm (SE)**

(72) Inventors:
• **EL-BELTAGY, Mohammed
102 45 Stockholm (SE)**
• **NAIEM, Amgad
102 45 Stockholm (SE)**
• **ESSAYADI, Fouad
102 45 Stockholm (SE)**

(74) Representative: **Kransell & Wennborg KB
P.O. Box 27834
115 93 Stockholm (SE)**

(56) References cited:
**US-A1- 2008 037 527**

• **Tara Small, Ben Liang and Baochun Li: "Scaling
Laws and Tradeoffs in Peer-to-Peer Live
Multimedia Streaming", MULTIMEDIA '06
Proceedings of the 14th annual ACM international
conference on Multimedia, 2 January 2006
(2006-01-02), pages 539-548, XP002692213, New
York, NY, USA ISBN: 1-59593-447-2 Retrieved
from the Internet: URL:http://delivery.acm.org/
10.1145/119000 0/1180754/p539-small.pdf?
ip=145.64.134.245
&acc=ACTIVE%20SERVICE&CFID=277354821&
CFTOK EN=36265971&__acm__
=1360868104_32faafed0cc
c44575745adb9938bb606 [retrieved on
2013-02-14]**

## Description

### TECHNICAL FIELD

The invention relates to a method of arranging peers in a P2P network and a device for arranging peers in a P2P network.

### BACKGROUND

For live video streaming in a client-server approach, the video stream is downloaded from the streaming server (i.e. source) to the client. A video stream consists of a set of consecutive data pieces, or data subset, that the client periodically requests in order to play the video. A scalable live streaming service requires high streaming server bandwidth to satisfy an increasing number of clients over the internet. In order to reduce the cost of the streaming server, Peer-to-peer (P2P) live streaming has been developed. The basic concept of P2P live streaming is to make the clients, referred to as peers in this context, share the load with the streaming server.

P2P live streaming systems has gained a lot of interest in the recent years as it has the advantage of allowing a streaming source to broadcast e.g. a live video event to a large number of peers, without having to provide all the required bandwidth. This is done by making use of the peers' upload capacity to assist the streaming source in broadcasting the content to the peers.

P2P networks comprise any networks composed of entities that each provides access to a portion of their resources (e.g., processing capacity, disk storage, and/or bandwidth) to other entities. The P2P concept differs from traditional client/server architecture based networks where one or more entities (e.g., computers) are dedicated to serving the others in the network. Typically, entities in a P2P network run similar networking protocols and software. Applications for P2P networks are numerous and may for example comprise transporting and/or storing data on the Internet, such as video distribution for content owners.

Many approaches have been developed to efficiently make use of the upload capacity of the peers. These approaches can be divided into two main categories.

*Tree-based systems* are based on constructing one or more structured trees in an overlay network where peers at the top of each tree feed the peers below them. This approach works well when the peers do not join or leave the system at high frequency as data flow is achieved without any further messages between the peers. However, in a high churn environment, tree maintenance can be very costly and sometimes destruction and reconstruction of the tree(s) are necessary.

*Mesh-based systems* do not enforce a tree construction, or in other words peer connectivity does not form a specified overlay, and they are connected to each other in an unstructured manner. They exchange data through so called gossip communication or by sending data request messages to each other. A disadvantage with mesh-based systems is that they can have a long setup time, as nodes need to negotiate with each other to find peers. However, many systems use the mesh-based approach as it is very robust to high churn. In such systems each peer has a number of neighbours that it potentially downloads from and failure of any neighbour is thus not as critical as in tree-based approaches.

Although individual peers take decisions locally without a global view in the mesh-based approaches, they can still reach comparable savings to tree based approaches when peer churn is considered, mainly since they do not have to carry the heavy overhead of maintaining a view of the global connectivity structure.

In a decentralized P2P live streaming network, each peer has k neighbouring peers from which it can attempt to download data content. Thus, the peer will try to find a neighbouring peer that it can download from instead of downloading the data content from the streaming server. Given such a prior art overlay network, if the peers start streaming data content from the same point in time, all the peers will not find an uploading peer that has useful content. Hence, almost all the peers will download from the streaming server, which ultimately leads to minimal savings in streaming server bandwidth utilization.

The disclosure of "Scaling Laws and Tradeoffs in Peer-to-Peer Live Multimedia Streaming" by Small et al. investigates the scaling laws of live P2P multi media streaming, by quantitatively studying the asymptotic effects and tradeoffs among three key parameters in P2P streaming: server bandwidth cost, the maximum number of peers that can be supported, and the maximum number of streaming hops experienced by a peer.

### SUMMARY

An object of the present invention is to solve or at least mitigate these problems in the art.

This object is attained by the method and device for arranging peers in a P2P network in accordance with the independent claims preferred embodiments are defined by the dependent claims.

To this end, a request is received from a peer entering the network to receive data content. Thereafter, a latency is determined with which the entering peer is to receive the data content with respect to a real-time playback point of the data content distributed by the streaming source. After the latency has been determined, the entering peer is provided with a plurality of randomly selected peers from which the requested data content can be downloaded with an expected probability depending on the determined latency. Thus, the entering peer is enabled to download, with the expected probability, the requested data content from a selected one of the randomly selected peers having a lower latency than that determined for the entering peer.

Hence, by carefully selecting an appropriate latency for the entering peer, the possibility of having the entering peer download from one of its neighbouring peers can be increased. Analogously, this decreases the risk of having a peer download the data content from the streaming source.

It is noted that the invention relates to all possible combinations of features recited in the claims. Further features of, and advantages with, the present invention will become apparent when studying the appended claims and the following description. Those skilled in the art realize that different features of the present invention can be combined to create embodiments other than those described in the following.

## BRIEF DESCRIPTION OF THE DRAWINGS

The invention is now described, by way of example, with reference to the accompanying drawings, in which:

Figure 1 illustrates data streaming in a prior art live streaming P2P network;

Figures 2a and b illustrate data streaming in a live streaming P2P network according to an embodiment of the present invention;

Figure 3 illustrates the function of a tracker according to an embodiment of the present invention;

Figure 4 illustrates a probability distribution of network peers latencies with respect to a real-time playback point of a streaming source according to an embodiment of the present invention;

Figure 5 illustrates an embodiment of the present invention where peers with latency $d_i$ send requests to neighbouring peers in region $\alpha$;

Figure 6 illustrates a Poisson distribution used to model distribution of network peer latencies according to an embodiment of the present invention;

Figure 7 illustrates streaming source bandwidth savings according to an embodiment of the present invention; and

Figure 8 illustrates a histogram representation of network peer latencies according to an embodiment of the present invention.

## DETAILED DESCRIPTION

The invention will now be described more fully herein after with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art.

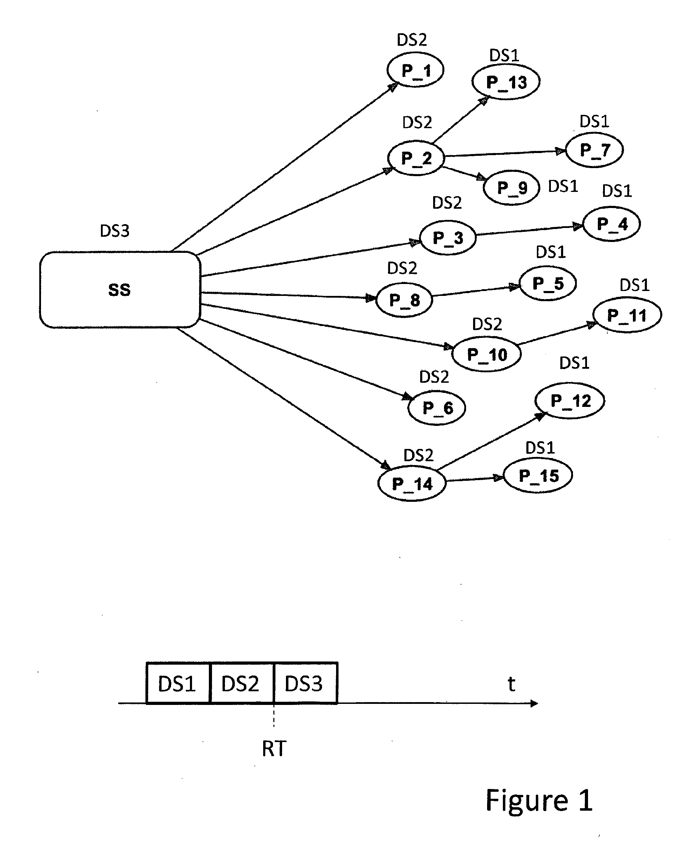

Figure 1 shows a prior art P2P overlay network with peers $p_1$-$p_{15}$ randomly connected to a streaming server SS. The streaming server distributes data content divided into smaller pieces of data that are streamed to the network peers. Thus, the data content is divided into consecutive pieces of data referred to as *data subsets* throughout this application. This is illustrated in the lower section of Figure 1, where the data content is divided into smaller data subsets DS1-DS3. Once the streaming source SS has "packeted" a data subset DS, it can be submitted to a peer, which starts playback of the data subset while the streaming source produces the next data subset. In Figure 1, the streaming server uploads data subset DS1 to peers $p_1$, $p_2$, $p_3$, $p_6$, $p_8$, $p_{10}$ and $p_{14}$, wherein playback of DS1 resumes at each respective peer. At the same time, the streaming server produces data subset DS2, and once the peers $p_1$, $p_2$, $p_3$, $p_6$, $p_8$, $p_{10}$ and $p_{14}$ have effected a full playback of data subset DS1, it is stored in a playback buffer of the respective peer. The streaming server thus uploads data subset DS2 to the peers $p_1$, $p_2$, $p_3$, $p_6$, $p_8$, $p_{10}$ and $p_{14}$, while peer $p_2$ uploads the latest fully downloaded data subset DS1 to peers $p_7$, $p_9$ and $p_{13}$, peer $p_3$ uploads DS1 to peer $p_4$, and so on.

Hence, in such a prior art P2P live streaming network, each peer entering the network will ask a tracker (not shown) for the latest data subset to start streaming from as well as k random peers to be its neighbours. Then, the entering peer will turn to its neighbours for the latest subset of data, and if it finds the required data subset on any neighbouring peer, it will start streaming from that neighbouring peer. As has been explained in the above, due to network delay and asynchronicity, the entering peer will be delayed by at least the full duration of one data subset from its uploader and at least twice that from the streaming server on condition that the entering peer's uploader is delayed by at least the full duration of one data subset from the source. In other words, with respect to a real-time playback point RT of the data content distributed by the streaming source, the entering peer will have a latency of at least two data subsets, while its uploader will have a latency of at least one data subset. If the entering peer cannot find the latest data subset on one of its neighbouring peers, it will download it from the streaming server. As compared to a traditional client-server network, where the server distributes content to all clients in the network, savings in streaming server load of the P2P network in Figure 1 is 8/15 = 0.53. That is, instead of streaming content to all 15 peers, the streaming server SS streams content to seven of the peers, which in their turn unload the server by streaming content to the remaining eight peers.

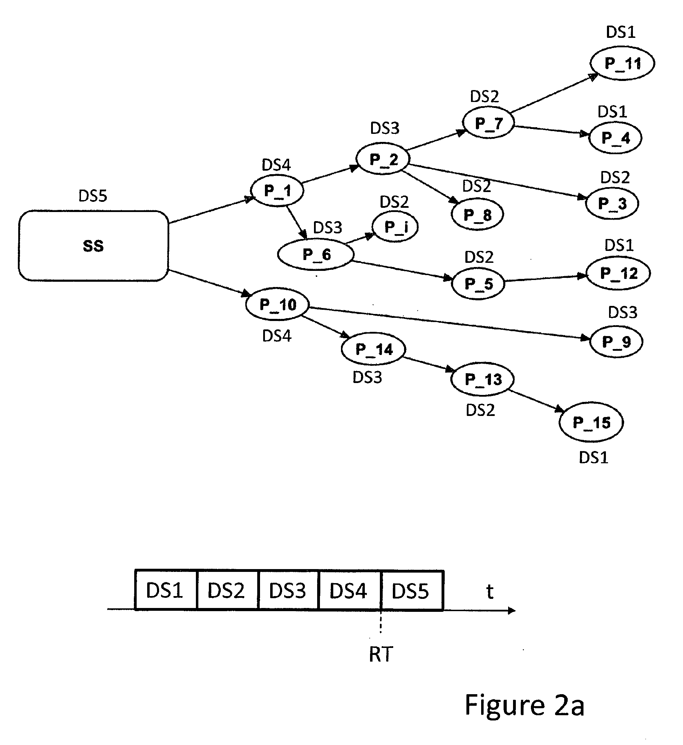

Now, with reference to Figure 2a showing an embodiment of the present invention, a new peer $p_i$ is entering the network and requests the tracker to receive data content originally streamed from the streaming source SS. The tracker determines that the latency, with respect to a real-time playback point RT of the data content distributed by the streaming source, with which the entering peer is to receive the data content is $d_i$ time units, i.e. the entering peer will receive and be able to playback a data subset $d_i$ time units after the same data subset have been rendered in real-time by the streaming source. The tracker will then provide the entering peer with a list of randomly selected peers from which the data content can be downloaded. This list of peers is derived or sampled from a probability density function for the peer as a function of latency. Thus, the entering peer is enabled to download, from a selected subset of the listed peers having a lower latency than that determined for the entering peer, the data content with the determined latency $d_i$ with respect to the real-time playback point of the streaming source.

With reference again to Figure 2a, the data subset which is rendered by the streaming source in real-time when a peer enters the network is DS5. Assuming for example that the determined latency $d_i$ is 3 units and expressed in a resolution of data subset durations, i.e. the determined latency is three full data subsets, and the list provided by the tracker to the entering peer $p_i$ comprises peers $p_2$, $p_5$, $p_6$, $p_7$ and $p_8$ (in practice this number is substantially higher), the entering peer can find the required data subset DS2 at either peer $p_2$ or $p_6$, being the latest fully downloaded data subset stored in a playback buffer of $p_2$ and $p_6$, respectively. Hence, DS2 is the latest data subset that can be uploaded by peer $p_2$ and $p_6$. In this particular example, since peer $p_2$ is uploading to three other peers, it may be preferred that the entering peer downloads from $p_6$. It should be noted that the entering peer cannot download from either one of $p_5$, $p_7$ or $p_8$, since they all are rendering data subset DS2 at the moment peer $p_i$ is entering the network. Thus, the latest fully downloaded data subset stored in the respective playback buffer of $p_5$, $p_7$ and $p_8$, is data subset DS1.

As compared to a traditional client-server network, savings in streaming server load of the P2P network in Figure 2a is 13/15 = 0.87. That is, instead of streaming content to all 15 peers, the streaming source SS streams content to two of the peers, which in their turn relieve the source from load by streaming content to the remaining 13 peers.

In the exemplified embodiments of the present invention, the determined latency with which an entering peer downloads data content with respect to a real-time playback point RT of the data content distributed by the streaming source is represented by time units equivalent to the duration of a data subset. As an example, if in a P2P network the duration of a distributed data subset is 300ms, a latency of one unit implies that a peer downloads a data subset 300ms after the same data subset has been rendered by the streaming source.

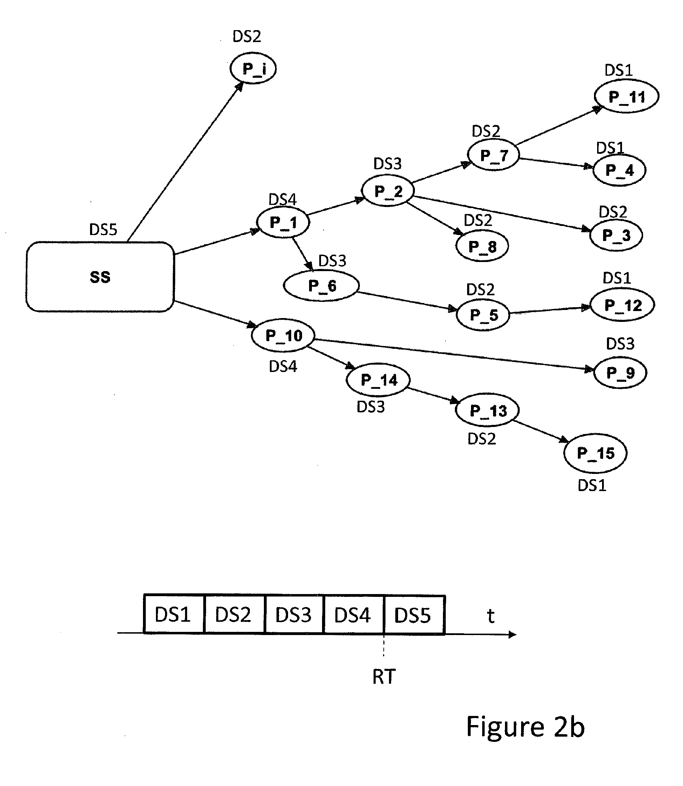

Figure 2b illustrates another embodiment of the present invention, where the tracker again determines that the latency $d_i$ of the entering peer $p_i$ should be 3 units. In this particular example, the list provided by the tracker to the entering peer $p_i$ comprises peers $p_3$, $p_4$, $p_7$, $p_8$ and $p_{11}$. In this case, with the determined latency of 3 units, the entering peer cannot find the required data subset DS2 at either of the listed peers. For peers $p_4$ and $p_{11}$, the latest fully downloaded data subset stored in the respective playback buffer is DS0, while peers $p_3$, $p_7$ and $p_8$ have DS1 as the latest fully downloaded data subset. Thus, none of the listed peers can upload the required data subset DS2 to the entering peer, which has as a consequence that the entering peer must turn to the streaming source for the required data subset.

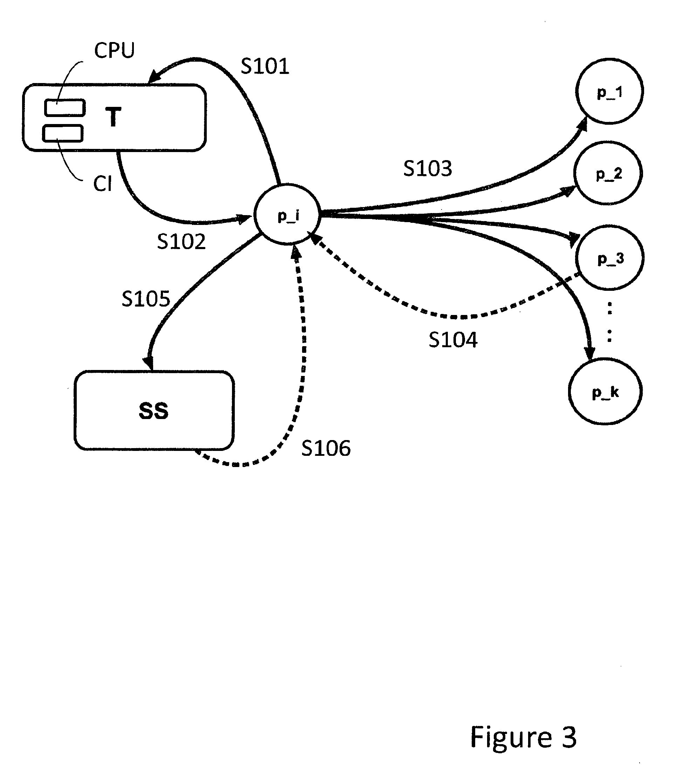

Figure 3 illustrates a further embodiment of the invention combining the teachings set forth in connection to Figures 2a and 2b. Continuous lines denote request/reply messages, while dashed lines denote streaming channels. A new peer $p_i$ enters the network and requests the tracker T in step S101 via its communication interface CI to receive data content originally streamed from the streaming source SS. The tracker determines the latency with which the entering peer is to receive the data content with respect to the real-time playback point and provides in step S102 the entering peer with a list of $k$ randomly selected peers from which the data content can be downloaded. Thus, the entering peer requests in step S103 the peers on the list to supply it with the latest subset of data given the determined latency for the entering peer. If there exists at least one peer out the $k$ randomly selected peers which has a latency with respect to the real-time playing point that is lower than that determined for the entering peer, the requested data content will be uploaded in step S104 to the entering peer. In Figure 3, peer $p_3$ uploads the requested data content to the entering peer

$p_i$. Depending on how the latency for the entering peer is selected, the probability that a peer can upload the requested data content to the entering peer in step S104 can be increased. If no randomly selected peer exists which has a latency with respect to the real-time playing point that is lower than that determined for the entering peer, i.e. all *k* peers has a latency which is equal to or higher than that determined for the entering peer, the requested data content cannot be uploaded in step S104 to the entering peer. In that case, the entering peer will in step S105 turn to the streaming server SS for the requested data content, which in its turn will upload the requested data content to the entering peer in step S106. Analogously, depending on how the latency for the entering peer is selected, the probability that the streaming server will have to upload the requested data content to the entering peer in step S106 can be decreased. These probabilities will be discussed in detail later on in the detailed description.

In embodiments of the invention, the tracker of the present invention determines the delay $d_i$ when an entering peer is to receive the content data, with respect to a real-time playback point of the data content uploaded by the streaming source on the basis of statistical information. The behaviour of a P2P network in which the present invention is implemented is stochastic, which is based on currently streaming network peers. Thus, statistical information should be considered such that a probability distribution that represents the behaviour of peers in the P2P live streaming network can be formed. Given the probability distribution p(d) of the latency from the real-time playback point of the live data content at the streaming server, expected savings in the streaming server bandwidth load can be calculated. Thus, by setting a latency value which follows the distribution p(d) for each entering peer, the savings of the stream server will approach the expected savings calculated using the said distribution. Or to put it in another way: by determining an appropriate latency with which the entering peer is to download data content, the probability that a network peer can be found from which the entering peer can download requested data content can be increased. Thus, the savings in the streaming server bandwidth is directly related to the probability that a network peer can upload requested data content to the entering peer.

With reference to Figure 3, the tracker T of embodiments of the present invention is typically a device equipped with one or more processing units CPU in the form of microprocessor(s) executing appropriate software stored in associated memory for procuring required functionality. However, other suitable devices with computing capabilities could be used, e.g. an application specific integrated circuit (ASIC), a field programmable gate array (FPGA), a complex programmable logic device (CPLD), etc., in order to control the P2P system and determine latencies of peers in accordance with embodiments of the method according to the present invention, while executing appropriate downloadable software stored in a suitable storage area, such as a RAM, a Flash memory or a hard disk.

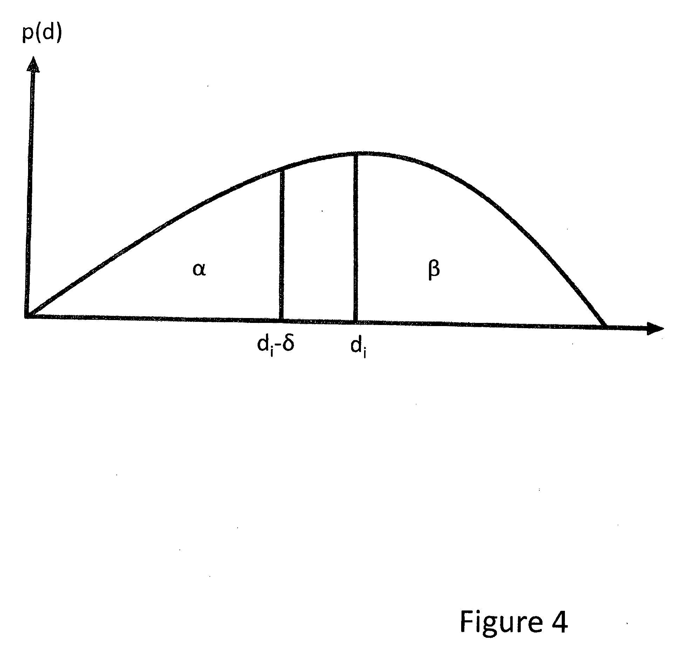

Reference is made to Figure 4, which shows an assumed shape for the distribution of the latency with respect to the real-time playback point in accordance with embodiments of the present invention. As the distribution of latency values is controlled by the tracker, a relationship between the expected savings and this distribution can be formulated. In embodiments of the present invention, any entering peer *i*, having *k* randomly selected neighbors and a certain latency $d_i$ with respect to the real-time playback point determined by the tracker will search among its neighbors for the requested data content, i.e. the data subset which was rendered in real-time at the streaming source $d_i$ data subsets earlier, see Figures 2a and 2b. If it does not find the particular data subset, it will request it from the streaming server incurring a cost to the streaming server bandwidth. This undesired situation occurs when the latest fully downloaded data subset at each one of the *k* neighbours have a latency which is equal to or more than that determined for the entering peer, i.e. fall in region β or the region defined by $d_i$ - 8 to $d_i$ of the distribution p(d).

On the other hand, if one of the *k* neighbouring peers has a latency that falls in the region α (and has enough bandwidth), then this peer can upload to the entering peer from the requested data subset. Again with reference to Figures 2a and 2b, it should be noted that region α is limited by $d_i$ - δ, where δ typically amounts to the duration of one data subset. That is, if the latency of the entering peer is determined to be three data subsets, it can download the requested data subset from a peer having a latency of two data subsets from the real-time playback point. Hence, an entering peer can only download from any neighbouring peer that precedes it by at least δ. Consequently, the probability $P_{di}$ for an entering peer that a randomly selected neighbouring peer is in the region α is simply the cumulative distribution function (cdf) value of the random variable d at the value $d_i$ - δ:

$$P_{\alpha_i} = cdf(d = d_i - \delta) = \int_0^{d_i - \delta} p(x)dx \qquad (1)$$

Thus, in an embodiment of the invention, the latency $d_i$ of the entering peer is determined by the tracker using the teachings set forth in Equation (1) such that the requested data content can be downloaded from one of the *k* randomly selected peers with a sufficiently high probability. Hence, by carefully selecting an appropriate latency for the entering peer, the possibility of having the entering peer download from one of its *k* neighbouring peers can be increased (or decreased, if required). A cost of having the entering peer downloading from a neighbouring peer with a higher 'probability is that the latency experienced by the entering peer increases. Thus, if for a given P2P live streaming network the probability of successful download from a neighbouring peer already is high, the latency may be selected by the tracker to be low with a still high download probability.

Further, this may be stipulated by a predetermined threshold value which the probability should exceed for the chance that the requested data content could be downloaded from a neighbouring peer should be considered great enough.

Each peer will be given a list of *k* randomly selected neighbouring peers, as described hereinabove, in order to ensure that the determined latencies from the real-time playback point will concur with the probability distribution p(d) and thus do not have any bias. Further as has been described in the above, an entering peer will download from the streaming server when the respective latest fully downloaded data subset of each peer among the *k* neighbouring peers is older than the data subset that the entering peer is requesting. This situation occurs in Figure 2b, where the tracker determines that the latency $d_i$ of the entering peer $p_i$ should be 3 data subsets and the list provided by the tracker to the entering peer $p_i$ comprises peers $p_3$, $p_4$, $p_7$, $p_8$ and $p_{11}$. In this case, with the determined latency of 3 units, the entering peer cannot find the required data subset DS2 at either of the listed peers. For peers $p_4$ and $p_{11}$, the latest fully downloaded data subset stored in the respective playback buffer is DS0, while peers $p_3$, $p_7$ and $p_8$ have DS1 as the latest fully downloaded data subset. Thus, none of the listed peers can upload the required data subset DS2 to the entering peer, since the available data subsets DS1 and DS0 both are older than the requested data subset DS2, which has as a consequence that the entering peer must turn to the streaming source for the required data subset. With reference to Figure 4, this occurs if all *k* randomly selected neighbouring peers have a higher latency than that determined for the entering peer, i.e. fall in region β of the probability distribution p(d).

In a further embodiment of the present invention, the probability that all the k neighbouring peers will be in the region β can be expressed as a binomial experiment, where the probability of attaining zero success trials out of a total number k of trails is determined. By considering success probability as the probability of finding one neighbouring peer that falls in the region α, the probability $P_F$ of finding <u>zero</u> neighbouring peers that belong to region α out of k neighbouring peers can be expressed as a binomial experiment with x = 0 as follows:

$$P_F(d_i) = Pr(X = 0 | k, P_{\alpha_i}) = \binom{k}{0} P^0 (1 - P_{\alpha_i})^k$$

$$P_F(d_i) = (1 - P_{\alpha_i})^k \tag{2}$$

Thus, $P_F(d_i)$ expresses the probability that a downloading peer with a determined latency $d_i$ will have to stream required data content from the streaming server since no neighbouring peer out of the k randomly selected peers is located in region α of Figure 4. Analogously, the probability that an entering peer with latency $d_i$ will find at least one neighbouring peer out of the k randomly selected peers in region α (from which it may be download the requested data content) can be expressed as 1 - $P_F(d_i)$. This embodiment presents a simple model which the tracker can use to determine latency $d_i$ for an entering peer such that data content can be streamed from a neighbouring peer with a certain probability.

However, this does not take into account finite bandwidth capacity of each one of the network peers. A situation may occur where an entering peer with latency $d_i$ has found one or more neighbouring peers out of the *k* randomly selected peers in region α, but the neighbouring peers cannot upload to the entering peer due to limitations in bandwidth capacity. In an embodiment of the present invention described in the following, the tracker takes into account the finite bandwidth capacity of the network peers.

For practical purposes, a discrete probability distribution p(d) will be used since practically, the latency from the real-time playback point is expressed as discrete values, i.e. in data subset durations. Thus, the latencies take on discrete values [$d_1$, $d_2$, $d_3$, ... ], where $d_{n+1} - d_n = \delta$ for all n. A discrete probability distribution implies that the expected number of peers with latency $d_i$ are $N_i = p(d_i)N$. For any latency $d_j$ from the real-time playing point, the number of download requests from peers with latency $d_i$ is:

$$R_{ij} = \begin{cases} N_{pi} \dfrac{p(d_j)}{P_{\alpha_i}} & \text{if } d_j \leq d_i - \delta \\ 0 & \text{otherwise} \end{cases} \qquad (3)$$

Where $N_{pi} = (1 - P_F(d_i))N_i$ is the expected number of peers with latency $d_i$ that will attempt to download from peers in region $\alpha$. The reason only a subset $N_{pi}$ of all peers $N_i$ having a latency $d_i$ will make a successful attempt to download from other peers in region $\alpha$ is that there is a probability that peers with latency $d_i$ will have no neighbouring peers in $\alpha$ and hence will have to download from the streaming source.

The total number of download requests that neighbouring peers make to peers with latency $d_j$ is thus:

$$R_j = \sum_{i=j+1}^{\infty} R_{ij}$$

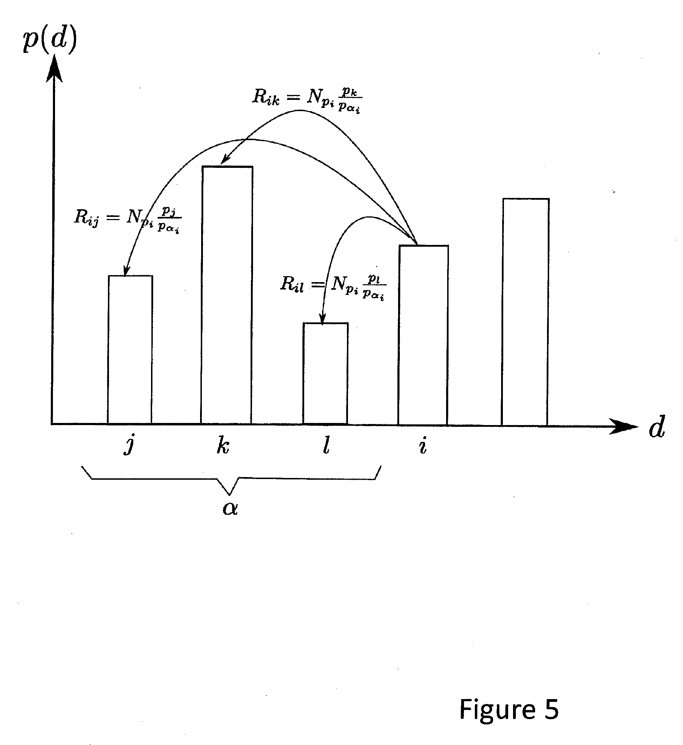

Figure 5 shows an example where peers with latency $d_i$ send requests to neighbouring peers in region $\alpha$, and it illustrates that no requests will be sent to neighbours in the $\beta$ region (which situation is represented by the second condition of Equation 3).

In order to find how many of these requests will be satisfied given that the number of peers with latency $d_j$ is expressed as $N_j$, each of them having a capacity of $E(u)$ simultaneous uploads, the probability that a peer with latency $d_j$ will respond to $l$ requests for download from the total number $R_j$ of download requests as:

$$B_j(l) = \binom{R_j}{l} \left(\frac{1}{N_j}\right)^l \left(1 - \frac{1}{N_j}\right)^{R_j - l} \qquad (4)$$

where $E(u)$ is the average number of simultaneous uploads per peer and is determined by bandwidth distribution $p_{bw}$ and the streaming bitrate br. The average number of simultaneous uploads per peer is thus calculated as $E(u) = E(p_{bw}/br)$. As an example, if a given peer is assigned a bandwidth of 1Mb/s and the streaming bit rate is 200kB/s, the peer can simultaneously upload to five other peers.

$B_j(l)$ determines the share of peers with latency $d_j$ that will receive $l$ download requests. For $l \leq E(u)$, the number of successful requests will be $l \times B_j(l) \times N_j$, while for $l > E(u)$, the number of successful requests will be $E(u) \times B_j(l) \times N_j$. Thus, peers with latency $d_j$ receive $R_j$ download requests, and each request will fall on one of the plurality $N_j$ of peers randomly, wherein the distribution of download requests can be modelled as a binomial distribution.

Therefore, the expected number of successful responses that peers with latency $d_j$ make to download requests from neighbouring peers (i.e. the load on peers with latency $d_j$) is:

$$L_j = \left( \sum_{l=1}^{E(u)} l B_j(l) + E(u) \left( 1 - \sum_{l=0}^{E(u)} B_j(l) \right) \right) N_j, \qquad (5)$$

and hence the expected number of peers streaming from the P2P network is the total number of successful downloads:

$$L = \sum_{j=0}^{\infty} L_j.$$

The probability that a download request which a neighbouring peer makes to peers with latency $d_j$ is successful can be calculated as the ratio between the expected number of successful responses and the total number of download requests, i.e. $L_j/R_j$.

Consequently, the probability that a download request from a peer with latency $d_j$ will fall in region $\alpha$ is (1-$P_F(d_i)$), i.e. the probability that a peer with latency $d_i$ will find at least one neighbouring peer out of the *k* randomly selected peers in region $\alpha$ from which it may be download the requested data content can be expressed as $1 - P_F(d_i)$. The probability that one of those requests to peers in region $\alpha$ actually will go to peers having the particular latency $d_j$ is $p(d_j)/P\alpha_i$ (deducted from Equation 3 which defines this probability for a number $N_i$ of peers with latency $d_i$). These are modelled as independent probabilities, and the probability that a peer having latency $d_i$ will be able to download content from a neighbouring peer having a particular latency of $d_j$ (given the bandwidth limitations) can be expressed as a product of these three probabilities. It then follows that the probability that a peer having a latency $d_i$ makes a successful download from the P2P network, i.e. a download from any peer having a latency lower than $d_i$, will be expressed as a sum of probabilities:

$$P_s(d_i) = (1 - P_F(d_i)) \sum_{j=0}^{j=i-1} \frac{L_j}{R_j} \frac{p(d_j)}{P_{\alpha_i}}, \qquad (6)$$

Hence, the summation covers *all* peers having a latency lower than $d_i$ and not only peers having a particular latency of $d_j$.

Expected streaming source savings will relate to the probability of successful download by each peer in the network:

$$savings = \sum_{i=0}^{\infty} P_s(d_i)p(d_i). \qquad (7)$$

The savings can however be expressed in a simpler manner as the ratio of successful downloads to the peers in the network and the total number of peers in the network, i.e.:

$$savings = \frac{L}{N}. \qquad (8)$$

This form for calculating the savings is conceptually simpler and computationally more efficient. Both Equations (7) and (8) yield the same result.

To recapitulate this particular embodiment of the present invention, the situation where a downloading peer with a determined latency $d_i$ will have to stream required data content from the streaming server occurs if:

(a) no neighbouring peer out of the *k* randomly selected peers is located in region $\alpha$, i.e. no neighbouring peer has a latency of $d_i - \delta$ or less, or

(b) one or more neighbouring peers out of the *k* randomly selected peers are located in region $\alpha$, but the neighbouring

peers cannot upload due to limitations in bandwidth capacity.

To put it in another way, even though neighbouring peers can be located in region $\alpha$ illustrated in Figure 4, the located neighbouring peers may be restrained from effecting an upload to the requesting peer due to bandwidth limitations. Equation 6 set forth in the above takes these bandwidth limitations into account and calculates $P_s(d_i)$, i.e. the probability that a peer having a latency $d_i$ makes a successful download from the P2P network.

Thus, in this embodiment of the present invention, the latency $d_i$ of the entering peer is determined by the tracker using the teachings set forth in Equation (6) such that the requested data content can be downloaded from one of the $k$ randomly selected peers with a sufficiently high probability. In contrast to previously described embodiments, this particular embodiment takes limitations in streaming bandwidth capacity into account.

In the previous embodiment of the present invention, the tracker did not take into account a situation where a joint probability of latency and bandwidth p(u, d) exists. If the latency and bandwidth is modelled as joint probability variables, it is possible to attain even better results in determining latency of an entering peer. The probability distribution of latency $d_i$ from the real-time playback point is the sum over u of the joint probability p(u, d) as follows:

$$p(d_i) = \sum_u p(u, d_i)$$

where u has been described in the above as the number of simultaneous uploads for a peer and is determined by bandwidth distribution $p_{bw}$ and the streaming bitrate br. The number of simultaneous uploads for a peer is $u = p_{bw}/br$.

In this more elaborate embodiment, the tracker will take into account the fact that peers requesting data content downloads may have different bandwidth u, i.e. different peers in the P2P network may be able to effect different numbers of uploads. With reference e.g. to the embodiments illustrated in Figures 2 and 3, the request received by the tracker will thus further contain the upload capacity of the uploading peer.

The number of download requests from peers with latency $d_i$ to peers with latency $d_j$ and upload capacity u is:

$$R_{iju} = \begin{cases} N_{p_i} \frac{p(u, d_j)}{P_{\alpha_i}} & \text{if } j \le i - \delta \\ 0 & \text{otherwise} \end{cases}$$

Similarly, the total number of download requests that neighbouring peers make to peers with latency $d_j$ and bandwidth u is:

$$R_{ju} = \sum_{i=j+1}^{\infty} R_{iju}$$

In order to find how many of these requests will be satisfied given that the number of peers with latency $d_j$ and upload capacity u is expressed as $N_{ju}$, the probability that a peer with latency $d_j$ and upload capacity u will respond to $l$ requests for download from the total number $R_{ju}$ of download requests as:

$$B_{ju}(l) = \binom{R_{ju}}{l} \left(\frac{1}{N_{ju}}\right)^l \left(1 - \frac{1}{N_{ju}}\right)^{R_{ju}-l}$$

where $N_{ju} = p(u, j)N$ is the expected number of peers with latency $d_j$ and upload capacity u. Therefore, the expected number of successful responses that peers with latency $d_j$ and upload capacity u make to download requests from neighbouring peers (i.e. the load on peers with latency $d_j$ and upload capacity u) is:

$$L_{ju} = \left( \sum_{l=1}^{u} l B_{ju}(l) + u \left( 1 - \sum_{l=0}^{u} B_{ju}(l) \right) \right) N_{ju}$$

and hence the expected number of peers streaming from the P2P network is the total number of successful downloads:

$$L = \sum_{j=0}^{\infty} \sum_{u} L_{ju}$$

In analogy with the reasoning previously set forth in connection to Equation 6, the probability that a peer with a latency of $d_i$ makes a successful download from the P2P network can now be expressed as:

$$P_s(d_i) = (1 - P_F(d_i)) \sum_{u} \sum_{j=0}^{j=i-1} \frac{L_{ju}}{R_{ju}} \frac{p(u, d_j)}{P_{\alpha_i}}, \qquad (9)$$

and the savings will be expressed as in Equations (8) or (7).

In yet further embodiments of the present invention, the previously discussed relationship between latency distribution p(d) on the one hand and probability of having an entering peer upload from a peer having a latency less than that determined for the entering peer or savings on the other can be exploited in order to optimize the latency distribution to achieve highest possible probability that the entering peer streams data content from a suitable network peer.

This is done by considering the expected streaming server savings as a measure for evaluating the distribution p(d). After finding an optimal distribution by using a known evolutionary optimization algorithm, each peer will be assigned a latency with respect to the real-time playback point of the streaming server based on the optimal distribution simply by having the tracker sample latency values from the optimal distribution and assigning them to the peers. Determination of the optimal distribution takes the previously mentioned average number $E(u_i)$ of simultaneous uploads per peer into account. In an embodiment of the present invention, changes in $E(u_i)$ are considered and used to adapt p(d) to keep it optimized for the periodical changes in the P2P network.

In a first embodiment for optimizing, the latency distribution is assumed to follow an established distribution, for example a Poisson distribution. As the shape of standard distributions is affected by its parameters, it is only necessary to consider the space of the values of these parameters. If it is assumed that the random latency variable d follows a Poisson distribution, then the parameter $\lambda$ of this distribution should be optimized.

$$p(d|\lambda) = \frac{\lambda^d e^{-\lambda}}{d!}, d = 0, 1, 2, \ldots$$

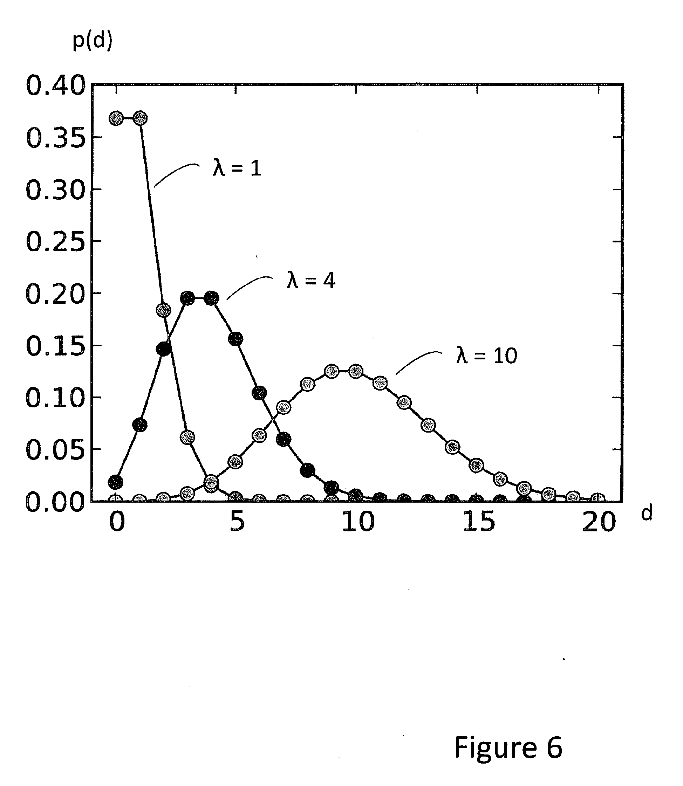

As is evident from Figure 6, for a given latency $d_i$ determined by the tracker for an entering peer, the parameter $\lambda$ can be varied until a maximum probability value is found. Hence, maximizing the probability that the entering peer will upload requested data content from a network peer is equivalent to maximizing the savings in streaming server bandwidth load. For instance, in the exemplifying Poisson distribution illustrated in Figure 6, for a determined latency $d_i = 10$, the probability will be maximized for $\lambda = 10$.

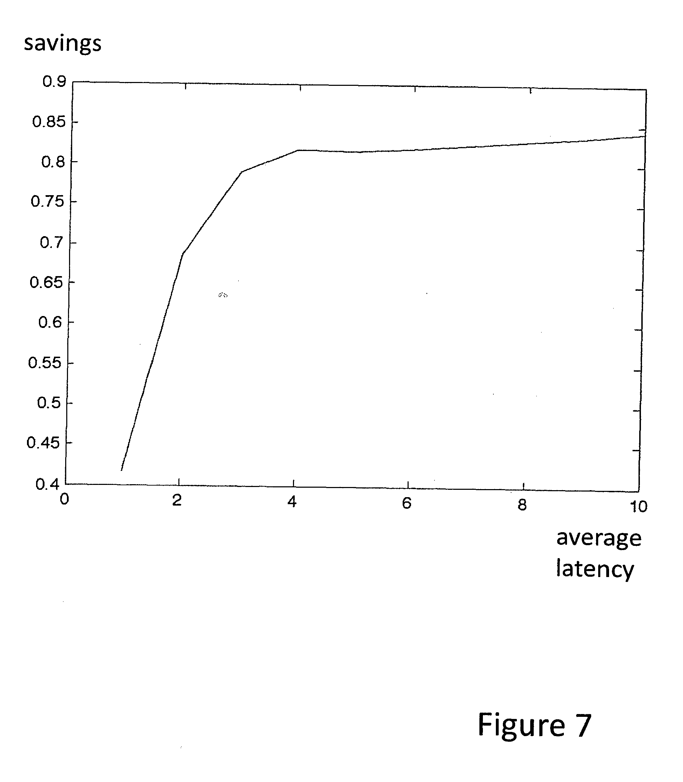

Before the shape of the distribution is optimized by, the number k of randomly selected neighbouring peers and the value of $E(u_i)$, i.e. the average number of simultaneous uploads per peer, should be set in an optimization engine which manages the optimization of the distribution p(d l λ). After finding a near optimal value for λ that maximizes the expected streaming server savings, by running a genetic algorithm (GA) on the space of λ, the tracker can then start using this optimal distribution for sampling the values of latency $d_i$ for the entering peer $p_i$. Figure 7 illustrates the streaming source load savings for different values of λ assuming that the tracker will provide the entering peer with a list of $k = 50$ randomly selected neighbouring peers and $E(u_i) = 3$. With these particular input numbers, the system will end up with about 82% expected savings. The x-axis represents peer latency.

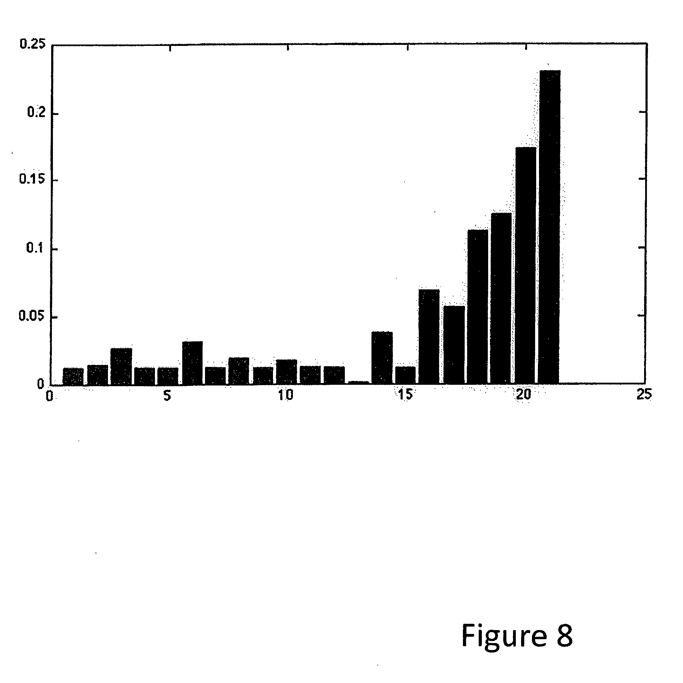

In another embodiment of the present invention, it is assumed that the latency distribution p(d) does not follow a predefined distribution but should be optimized as a histogram of probabilities. This is useful since the distribution shape is not constrained to follow a specific distribution but rather makes is free to have any possible shape. In this context it is assumed that the maximum number of bars in the histogram, i.e. the maximum possible latencies di, is Dmax. Thus, the target histogram representation will have only Dmax bars (referred to as frequency values). In Figure 8, Dmax is selected to be 21, Each bar can attain values in the interval [0; 1], which means that the search space of the optimization will contain 21 decision variables. Since the histogram frequencies must add up to 1 (because of the constraint that this must be a probability distribution), a good optimization algorithm which is capable of handling these constraints is the genetic algorithm (GA). Having the same settings used in the Poisson shape optimization illustrated in Figure 7, i.e. $k = 50$ and E(ui) = 3, the optimal histogram is shown in Figure 8 with expected savings of about 85%.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1.  A method of arranging peers in a P2P network comprising a streaming source and a plurality of peers, the method being **characterized in** comprising:

    receiving a request from a peer entering the network to receive data content;
    determining, with respect to a real-time playback point of the data content distributed by the streaming source, a latency with which the entering peer is to receive the data content from a determined probability distribution for the latencies with which the network peers receive data content distributed by the streaming source; and providing the entering peer with a plurality of randomly selected peers from which the requested data content can be downloaded with an expected probability depending on the determined latency and bandwidth capacity of the plurality of randomly selected peers, wherein the entering peer is enabled to download, with the expected probability, the requested data content from a selected one of said plurality of randomly selected peers having a lower latency than that determined for the entering peer.

2.  The method according to claim 1, wherein the step of determining the latency for the entering peer comprises:

    determining the probability that none of the plurality of randomly selected peers will have a latency which is lower than that determined for the entering peer by formulating a binomial experiment, where zero successes are defined in a number of trials equal to the number of randomly selected peers; and
    determining the probability that at least one of the plurality of randomly selected peers has a latency, with respect to a real-time playback point of the data content distributed by the streaming source, which is lower than that determined for the entering peer, by subtracting from 1 the probability that none of the plurality or randomly selected peers will have a latency which is lower than that determined for the entering peer.

3.  The method according to claim 1, wherein the probability that the entering peer is capable of downloading the requested data content from a selected one of the plurality of randomly selected peers is determined as the product of:

    the probability that the entering peer makes a successful download of content from a selected one of the plurality of randomly selected peers, which is determined by calculating the ratio between expected number of successful responses and total number of download requests from network peers; and
    the probability that at least one of the plurality of randomly selected peers has a latency which is lower than that determined for the entering peer and that a download request will go to any of said peers having a latency lower than that determined for the entering peer.

4.  The method according to any one of the preceding claims, wherein the step of taking into account bandwidth capacity of the plurality of randomly selected peers comprises:

modelling the latency and bandwidth capacity of the plurality of randomly selected peers as joint probability variables; and the probability that the entering peer is capable of downloading the requested data content from a selected one of the plurality of randomly selected peers is determined on the basis of the joint probability of the latency and bandwidth capacity.

5. The method according to claim 4, wherein the probability that the entering peer is capable of downloading the requested data content from a selected one of the plurality of randomly selected peers is determined as the product of:

the probability that the entering peer makes a successful download of content from a selected one of the plurality of randomly selected peers having a particular upload capacity out of a plurality of possible upload capacities, which is determined by calculating the ratio between expected number of successful responses and total number of download requests from network peers; and

the probability that at least one of the plurality of randomly selected peers has a latency which is lower than that determined for the entering peer and that a download request will go to any of said at least one peers having a latency lower than that determined for the entering peer.

6. The method according to any one of the preceding claims, wherein the step of determining the latency for the entering peer comprises:

determining a probability distribution for the latencies with which the network peers receive data content distributed by the streaming source;

optimizing a parameter of said probability distribution using an evolutionary optimization algorithm for all possible latencies, thereby maximizing the probability that the entering peer is capable of downloading the requested data content from a selected one of the plurality of randomly selected peers having a latency, lower than that determined for the entering peer.

7. The method according to claim 6, wherein the probability distribution is a Poisson distribution and the parameter to be optimized is the Poisson distribution parameter $\lambda$.

8. The method according to any one of claims 1-5, wherein the step of determining the latency for the entering peer comprises:

determining a histogram of probabilities for the latencies with which the network peers receive data content distributed by the streaming source;

optimizing the histogram using an evolutionary optimization algorithm for all possible latencies, thereby maximizing the probability that the entering peer is capable of downloading the requested data content from a selected one of the plurality of randomly selected peers having a latency, lower than that determined for the entering peer

9. A device for arranging a peer in a P2P network comprising a streaming source and a plurality of peers, the device being **characterized in** comprising:

a processing unit; and

a communication interface, wherein

said communication interface being arranged to receive a request from a peer entering the network to receive data content;

said processing unit being arranged to determine, with respect to a real-time playback point of the data content distributed by the streaming source, a latency with which the entering peer is to receive the data content from a determined probability distribution for the latencies with which the network peers receive data content distributed by the streaming source; and

said communication interface being arranged to provide the entering peer with a plurality of randomly selected peers from which the requested data content can be downloaded with an expected probability depending on the determined latency and bandwidth capacity of the plurality of randomly selected peers, wherein the entering peer is enabled to download, with the expected probability, the requested data content from a selected one of said plurality of randomly selected peers having a lower latency than that determined for the entering peer.

10. The device according to claim 9, said processing unit further being arranged to determine the latency for the entering peer by:

determining the probability that none of the plurality of randomly selected peers will have a latency which is lower than that determined for the entering peer by formulating a binomial experiment, where zero successes are defined in a number of trials equal to the number of randomly selected peers; and
determining the probability that at least one of the plurality of randomly selected peers has a latency, with respect to a real-time playback point of the data content distributed by the streaming source, which is lower than that determined for the entering peer, by subtracting from 1 the probability that none of the plurality or randomly selected peers will have a latency which is lower than that determined for the entering peer.

11. The device according to claim 9, said processing unit being arranged to determine the probability that the entering peer is capable of downloading the requested data content from a selected one of the plurality of randomly selected peers as the product of:

the probability that the entering peer makes a successful download of content from a selected one of the plurality of randomly selected peers, which is determined by calculating the ratio between expected number of successful responses and total number of download requests from network peers; and
the probability that at least one of the plurality of randomly selected peers has a latency which is lower than that determined for the entering peer and that a download request will go to any of said at least one peers having a latency lower than that determined for the entering peer.

12. The device according to any one of claims 9-11, said processing unit being arranged to take into account bandwidth capacity of the plurality of randomly selected peers by:

modelling the latency and bandwidth capacity of the plurality of randomly selected peers as joint probability variables; and the probability that the entering peer is capable of downloading the requested data content from a selected one of the plurality of randomly selected peers is determined on the basis of the joint probability of the latency and bandwidth capacity.

13. The device according to claim 12, wherein the processing unit is arranged to determine probability that the entering peer is capable of downloading the requested data content from a selected one of the plurality of randomly selected peers as the product of:

the probability that the entering peer makes a successful download of content from a selected one of the plurality of randomly selected peers having a particular upload capacity out of a plurality of possible upload capacities, which is determined by calculating the ratio between expected number of successful responses and total number of download requests from network peers; and
the probability that at least one of the plurality of randomly selected peers has a latency which is lower than that determined for the entering peer and that a download request will go to any of said peers having a latency lower than that determined for the entering peer.

14. The device according to any one of the claims 9-13, said processing unit further being arranged to determine the latency for the entering peer by:

determining a probability distribution for the latencies with which the network peers receive data content distributed by the streaming source; and
optimizing a parameter of said probability distribution using an evolutionary optimization algorithm for all possible latencies, thereby maximizing the probability that the entering peer is capable of downloading the requested data content from a selected one of the plurality of randomly selected peers having a latency, lower than that determined for the entering peer.

15. A computer program product comprising computer-executable components for causing a device to perform the steps recited in any one of claims 1-8 when the computer-executable components are run on a processing unit included in the device.

**Patentansprüche**

1. Eine Methode zum Anordnen von Peers in einem P2P Netzwerk aufweisend eine Streaming-Quelle und eine Vielzahl von Peers, wobei die Methode **gekennzeichnet ist durch** das Aufweisen von:

   dem Erhalten einer Anfrage von einem Peer, das in das Netzwerk eintritt um Dateninhalt zu erhalten;
   dem Bestimmen, im Bezug auf einen Echtzeit-Wiedergabezeitpunkt des Dateninhalts der **durch** die Streaming-Quelle verteilt wird, einer Wartezeit mit welcher das eintretende Peer den Dateninhalt von einer bestimmten Wahrscheinlichkeitsverteilung für die Wartezeiten mit welchen die Netzwerk-Peers Dateninhalt der von der Streaming-Quelle verteilt wird erhalten, erhält;
   dem Versehen des eintretenden Peers mit einer Vielzahl von zufällig ausgewählten Peers von welchen der angeforderte Dateninhalt runtergeladen werden kann mit einer erwarteten Wahrscheinlichkeit, die von der bestimmten Wartezeit und Bandbreitenkapazität der Vielzahl von zufällig ausgewählten Peers abhängt, worin das eintretende Peer fähig ist um, mit der erwarteten Wahrscheinlichkeit, den angeforderten Dateninhalt von einem Ausgewählten der Vielzahl von zufällig ausgewählten Peers mit einer tieferen Wartezeit als der bestimmten des eintretenden Peers, runterzuladen.

2. Die Methode gemäss Anspruch 1, worin der Schritt des Bestimmens der Wartezeit für das eintretende Peer:

   das Bestimmen der Wahrscheinlichkeit dass keines der Vielzahl von zufällig ausgewählten Peers eine Wartezeit haben wird, die tiefer ist als die Bestimmte für das eintretende Peer, durch das Formulieren eines binomischen Experiments, wobei null Erfolge definiert sind als eine Nummer von Versuchen die gleich gross ist wie eine Nummer von zufällig ausgewählten Peers; und
   das Bestimmen der Wahrscheinlichkeit dass mindestens eines der Vielzahl von zufällig ausgewählten Peers eine Wartezeit, im Bezug auf einen Echtzeit-Wiedergabezeitpunkt des Dateninhalts der durch die Streaming-Quelle verteilt wird, aufweist, die tiefer ist als die bestimmte Wartezeit für das eintretende Peer, durch das Subtrahieren der Wahrscheinlichkeit, dass keine der Vielzahl oder zufällig ausgewählten Peers eine Wartezeit, die weniger als als die bestimmte für das eintretende Peer ist, von 1,

   aufweist.

3. Die Methode gemäss Anspruch 1, worin die Wahrscheinlichkeit, dass das eintretende Peer fähig ist den angeforderten Dateninhalt von einem ausgewählten der zufällig ausgewählten Peers herunterzuladen, bestimmt wird durch das Produkt von:

   der Wahrscheinlichkeit, dass das eintretende Peer einen erfolgreichen Download von einem ausgewählten der zufällig ausgewählten Peers macht, wobei die Wahrscheinlichkeit bestimmt wird durch das Berechnen des Verhältnis zwischen einer erwarteten Anzahl von erfolgreichen Rückmeldungen und einer totalen Anzahl von Download-Anfragen von Netzwerk Peers; und
   der Wahrscheinlichkeit, dass mindestens eines der Vielzahl von zufällig ausgewählten Peers eine Wartezeit aufweist die tiefer ist als die bestimmte für das eintretende Peer und dass eine Downloadanfrage an ein beliebiges der besagten Peers, die eine Wartezeit tiefer als die bestimmte für das eintretende Peer aufweisen, geht.

4. Die Methode gemäss einem der vorhergehenden Ansprüche, worin der Schritt der Berücksichtigung der Bandbreitenkapazität der Vielzahl von zufällig ausgewählten Peers:

   das Modellieren der Wartezeit und Bandbreitenkapazität der Vielzahl von zufällig ausgewählten Peers als gemeinsame Wahrscheinlichkeitsvariablen aufweist; wobei die Wahrscheinlichkeit, dass das eintretende Peer fähig ist zum Downloaden des angeforderten Dateninhalts von einem ausgewählten der Vielzahl der zufällig ausgewählten Peers bestimmt wird ausgehend von der gemeinsamen Wahrscheinlichkeitsvariablen der Wartezeit und der Bandbreitenkapazität.

5. Die Methode gemäss Anspruch 4, worin die Wahrscheinlichkeit, dass das eintretende Peer fähig ist den angeforderten Dateninhalt von einem ausgewählten der zufällig ausgewählten Peers herunterzuladen, bestimmt wird durch das Produkt von:

   der Wahrscheinlichkeit, dass das eintretende Peer einen erfolgreichen Download von einem ausgewählten der zufällig ausgewählten Peers macht, das eine bestimmte Uploadkapazität von einer Vielzahl von Uploadkapazitäten hat, wobei die Uploadkapazität bestimmt wird durch das Berechnen des Verhältnisses zwischen einer erwarteten Anzahl von erfolgreichen Rückmeldungen und einer totalen Anzahl von Downloadanfragen von Netzwerk Peers; und

der Wahrscheinlichkeit, dass mindestens eines der Vielzahl von zufällig ausgewählten Peers eine Wartezeit aufweist, die tiefer ist als die bestimmte für das eintretende Peer und dass eine Downloadanfrage an ein beliebiges des genannten mindestens einen Peers geht, das eine Wartezeit, die tiefer ist als die bestimmte für das eintretende Peer, aufweist.

6. Die Methode gemäss einem der vorhergehenden Ansprüche, worin der Schritt des Bestimmens der Wartezeiten für das eintretende Peer:

das Bestimmen einer Wahrscheinlichkeitsverteilung für die Wartezeiten mit welcher die Netzwerk Peers Dateninhalt, der durch die Streaming-Quelle verteilt wird, erhalten;

das Optimieren eines Parameters der genannten Wahrscheinlichkeitsverteilung mittels eines evolutionären Optimierungsalgorithmus für alle möglichen Wartezeiten, wobei dadurch die Wahrscheinlichkeit, dass das eintretende Peer fähig ist den angeforderten Dateninhalt von einem ausgewählten der Vielzahl von zufällig ausgewählten Peers mit einer Wartezeit, die tiefer ist als diejenige des eintretenden Peers, herunterzuladen, maximiert wird,

aufweist.

7. Die Methode gemäss Anspruch 6, worin die Wahrscheinlichkeitsverteilung eine Poisson Verteilung ist und der zu optimierende Parameter der Poissonverteilungsparameter $\lambda$ ist.

8. Die Methode gemäss einem der Ansprüche 1 bis 5, worin der Schritt des Bestimmens der Wartezeit für das eintretende Peer:

das Bestimmen eines Histogramms der Wahrscheinlichkeiten für die Wartezeiten mit welchen die Netzwerk Peers Dateninhalt, der von der Streaming-Quelle verteilt wird, erhalten;

das Optimieren des Histogramms mittels eines evolutionären Optimierungsalgorithmus für alle möglichen Wartezeiten, wobei dadurch die Wahrscheinlichkeit, dass das eintretende Peer fähig ist den angeforderten Dateninhalt von einem ausgewählten der Vielzahl von zufällig ausgewählten Peers mit einer Wartezeit, die tiefer ist als diejenige des eintretenden Peers, herunterzuladen, maximiert wird,

aufweist.

9. Ein Gerät zum Anordnen eines Peers in einem P2P Netzwerk aufweisend eine Streaming-Quelle und eine Vielzahl von Peers, wobei das Gerät **gekennzeichnet ist durch** das Aufweisen von:

einer Prozessoreinheit; und
einer Kommunikationsschnittstelle, worin
die genannte Kommunikationsschnittstelle angeordnet ist um eine Anfrage von einem Peer zu erhalten, wobei das Peer ins Netzwerk eintritt um Dateninhalt zu erhalten;
die genannte Prozessoreinheit angeordnet ist um im Bezug auf einen Echtzeit-Wiedergabezeitpunkt des Dateninhalts, der **durch** die Streaming-Quelle verteilt wird, eine Wartezeit mit welcher das eintretende Peer den Dateninhalt von einer bestimmten Wahrscheinlichkeitsverteilung für die Wartezeiten mit welchen die Netzwerk-Peers Dateninhalt der von der Streaming-Quelle verteilt wird, erhalten, zu bestimmen; und
die genannte Kommunikationsschnittstelle angeordnet ist um das eintretende Peer mit einer Vielzahl von zufällig ausgewählten Peers von welchen der angeforderte Dateninhalt runtergeladen werden kann mit einer erwarteten Wahrscheinlichkeit, die von der bestimmten Wartezeit und Bandbreitenkapazität der Vielzahl von zufällig ausgewählten Peers abhängt, worin das eintretende Peer fähig ist um, mit der erwarteten Wahrscheinlichkeit, den angeforderten Dateninhalt von einem Ausgewählten, der Vielzahl von zufällig ausgewählten Peers mit einer tieferen Wartezeit als der bestimmten des eintretenden Peers, runterzuladen, zu versehen.

10. Das Gerät gemäss Anspruch 9, wobei die genannte Prozessoreinheit angeordnet ist um die Wartezeit des eintretenden Peers durch:

das Bestimmen der Wahrscheinlichkeit dass keines der Vielzahl von zufällig ausgewählten Peers eine Wartezeit haben wird, die tiefer ist als die Bestimmte für das eintretende Peer, durch das Formulieren eines binomischen Experiments, wobei null Erfolge definiert sind als eine Nummer von Versuchen die gleich gross ist wie eine Nummer von zufällig ausgewählten Peers; und

das Bestimmen der Wahrscheinlichkeit dass mindestens eines der Vielzahl von zufällig ausgewählten Peers eine Wartezeit, im Bezug auf einen Echtzeit-Wiedergabezeitpunkt des Dateninhalts der durch die Streaming-Quelle verteilt wird, aufweist, die tiefer ist als die bestimmte Wartezeit für das eintretende Peer, durch das Subtrahieren der Wahrscheinlichkeit, dass keine der Vielzahl oder zufällig ausgewählten Peers eine Wartezeit, die weniger als als die bestimmte für das eintretende Peer ist, von 1,

zu bestimmen.

11. Das Gerät gemäss Anspruch 9, wobei die genannte Prozessoreinheit angeordnet ist um die Wahrscheinlichkeit, dass das eintretende Peer fähig ist den angeforderten Dateninhalt von einem ausgewählten der zufällig ausgewählten Peers herunterzuladen, durch das Produkt von:

der Wahrscheinlichkeit, dass das eintretende Peer einen erfolgreichen Download von einem ausgewählten der zufällig ausgewählten Peers macht, wobei die Wahrscheinlichkeit bestimmt wird durch das Berechnen des Verhältnisses zwischen einer erwarteten Anzahl von erfolgreichen Rückmeldungen und einer totalen Anzahl von Download-Anfragen von Netzwerk Peers; und

der Wahrscheinlichkeit, dass mindestens eines der Vielzahl von zufällig ausgewählten Peers eine Wartezeit aufweist, die tiefer ist als die bestimmte für das eintretende Peer und dass eine Downloadanfrage an ein beliebiges der besagten Peers, die eine Wartezeit tiefer als die bestimmte für das eintretende Peer aufweisen, geht,

zu bestimmen.

12. Das Gerät gemäss einem der Ansprüche 9 bis 11, wobei die genannte Prozessoreinheit angeordnet ist um die Bandbreitenkapazität der Vielzahl von zufällig ausgewählten Peers durch:

das Modellieren der Wartezeit und Bandbreitenkapazität der Vielzahl von zufällig ausgewählten Peers als gemeinsame Wahrscheinlichkeitsvariablen aufweist; wobei die Wahrscheinlichkeit, dass das eintretende Peer fähig ist zum Downloaden des angeforderten Dateninhalts von einem ausgewählten der Vielzahl der zufällig ausgewählten Peers bestimmt wird ausgehend von der gemeinsamen Wahrscheinlichkeitsvariablen der Wartezeit und der Bandbreitenkapazität.

13. Das Gerät gemäss Anspruch 12, wobei die genannte Prozessoreinheit angeordnet ist um die Wahrscheinlichkeit, dass das eintretende Peer fähig ist den angeforderten Dateninhalt von einem ausgewählten der zufällig ausgewählten Peers herunterzuladen, durch das Produkt von:

der Wahrscheinlichkeit, dass das eintretende Peer einen erfolgreichen Download von einem ausgewählten der zufällig ausgewählten Peers macht, das eine bestimmte Uploadkapazität von einer Vielzahl von Uploadkapazitäten hat, wobei die Uploadkapazität bestimmt wird durch das Berechnen des Verhältnisses zwischen einer erwarteten Anzahl von erfolgreichen Rückmeldungen und einer totalen Anzahl von Downloadanfragen von Netzwerk Peers; und

der Wahrscheinlichkeit, dass mindestens eines der Vielzahl von zufällig ausgewählten Peers eine Wartezeit aufweist, die tiefer ist als die bestimmte für das eintretende Peer und dass eine Downloadanfrage an ein beliebiges des genannten mindestens einen Peers geht, das eine Wartezeit, die tiefer ist als die bestimmte für das eintretende Peer,

zu bestimmen.

14. Das Gerät gemäss einem der Ansprüche 9-13, wobei die genannte Prozessoreinheit angeordnet ist um die Wartezeiten für die eintretenden Peers durch:

das Bestimmen einer Wahrscheinlichkeitsverteilung für die Wartezeiten mit welcher die Netzwerk Peers Dateninhalt, der durch die Streaming-Quelle verteilt wird, erhalten;

das Optimieren eines Parameters der genannten Wahrscheinlichkeitsverteilung mittels eines evolutionären Optimierungsalgorithmus für alle möglichen Wartezeiten, wobei dadurch die Wahrscheinlichkeit, dass das eintretende Peer fähig ist den angeforderten Dateninhalt von einem ausgewählten der Vielzahl von zufällig ausgewählten Peers mit einer Wartezeit, die tiefer ist als diejenige des eintretenden Peers, herunterzuladen, maximiert wird,

zu bestimmen.

**15.** Ein Computer-Programmprodukt aufweisend computer-ausführbare Komponenten um zu bewirken, dass ein Gerät die Schritte gemäss einem der Ansprüche 1 bis 8 ausführt, wenn die computer-ausführbaren Komponenten auf einer Prozessoreinheit, die im Gerät integriert ist, ausgeführt werden.

**Revendications**

**1.** Un procédé pour arranger des pairs dans un réseau P2P comprenant une source de transmission et une pluralité de pairs, le procédé étant **caractérisé en ce qu'**il comprend:

la réception d'une demande d'un pair entrant dans le réseau pour recevoir de contenu de données ;
la détermination par rapport à un point de play-back en temps réel du contenu de données distribués par la source transmission, une latence avec laquelle le pair entrant est de recevoir le contenu des données à partir d'une distribution de probabilité déterminée pour les latences avec lesquelles les pairs du réseau reçoivent le contenu des données distribué par la source de transmission ; et
la mise à disposition du pair entrant avec une pluralité des pairs choisis au hasard desquels le contenu des données demandé peut être télécharger avec une probabilité attendue en fonction de la latence déterminée et la capacité de bande passante de la pluralité des pairs choisis au hasard, dans lequel le pair entrant est permis de télécharger, avec la probabilité attendue, le contenu des données demandé à partir d'un sélectionné de ladite pluralité de pairs choisis au hasard ayant une latence inférieure à celle déterminée pour le pair entrant.

**2.** Le procédé selon la revendication 1, dans lequel l'étape de la détermination de la latence pour le pair entrant comprend :

la détermination de la probabilité qu'aucun de la pluralité des pairs choisis au hasard aura une temps de latence inférieure à celle déterminée pour le pair entrant en formulant une expérience binomiale, où zéro réussites sont définies dans un nombre d'essais égal au nombre de pairs choisis au hasard ; et
la détermination de la probabilité qu'au moins un de la pluralité de pairs choisis au hasard a une latence, par rapport à un point de play-back en temps réel du contenu de données distribués par la source de transmission, qui est inférieure à celle déterminée pour le pair entrant, en soustrayant de 1 la probabilité qu'aucun de la pluralité des pairs choisis au hasard aura une temps de latence inférieure à celle déterminée pour le pair entrant.

**3.** Le procédé selon la revendication 1, dans lequel la probabilité que le pair entrant est capable de télécharger le contenu de données demandé d'un sélectionné de la pluralité de pairs choisis au hasard est déterminée comme le produit de :

la probabilité que le pair entrant fait un téléchargement de contenu réussi d'un sélectionné de la pluralité de pairs choisis au hasard, qui est déterminée en calculant le rapport entre un nombre attendu de réponses réussies et un nombre total de demandes de téléchargement des pairs du réseau ; et
la probabilité qu'au moins un de la pluralité des pairs choisis au hasard a une latence qui est inférieure à celle déterminée pour le pair entrant et qu'une demande de téléchargement ira à l'un quelconque desdits pairs ayant une latence inférieure à celle déterminée pour le pair entrant.

**4.** Le procédé selon l'une des revendications précédentes, dans lequel l'étape de tenant en compte la capacité de bande passante de la pluralité des pairs choisis au hasard comprend :

la modélisation de la latence et capacité de la bande passante de la pluralité des pairs choisis au hasard comme variables de probabilité conjointe ; et la probabilité que le pair entrant est capable de télécharger le contenu des données demandé d'un sélectionné de la pluralité des pairs choisis au hasard est déterminée sur la base de la probabilité conjointe de la latence et la capacité de bande passante.

**5.** Le procédé selon la revendication 4, dans lequel la probabilité que le pair entrant est capable de télécharger le contenu des données demandé d'un sélectionné de la pluralité des pairs choisis au hasard est déterminée comme le produit de :

la probabilité que le pair entrant fait un téléchargement de contenu des données réussi d'un sélectionné de la pluralité des pairs choisis au hasard ayant une capacité de téléchargement vers l'amont particulière de la pluralité des capacités de téléchargement vers l'amont possible, qui est déterminée en calculant le rapport entre un nombre attendu de réponses réussies et un nombre total de demandes de téléchargement des pairs du réseau ; et

la probabilité qu'au moins un de la pluralité des pairs choisis au hasard a une latence qui est inférieure à celle déterminée pour le pair entrant et qu'une demande de téléchargement ira à une quelconque desdits au moins un pairs ayant une latence inférieure à celle déterminée pour le pair entrant.

6.  Le procédé selon l'une des revendications précédentes, dans lequel l'étape de la détermination de la latence pour le pair entrant comprend :

la détermination d'une distribution de probabilité pour les latences avec lesquelles les pairs du réseau reçoivent contenu des données distribué par la source de transmission ;

l'optimisation d'un paramètre de ladite distribution de probabilité en utilisant un algorithme d'optimisation évolutive pour tous les latences possibles, maximant ainsi la probabilité que le pair entrant est capable de télécharger le contenu des données demandé d'un sélectionné de la pluralité des pairs choisis au hasard ayant une latence inférieure à celle déterminée pour le pair entrant.

7.  Le procédé selon la revendication 6, dans lequel la distribution est une distribution de Poisson et le paramètre à optimiser est le paramètre de distribution de Poisson $\lambda$.

8.  Le procédé selon l'une des revendications 1 à 5, dans lequel l'étape de la détermination de la latence pour le pair entrant comprend :

la détermination d'un histogramme de probabilités pour les latences avec lesquelles les pairs du réseau reçoivent de contenu des données distribué par la source de transmission ;

l'optimisation de l'histogramme en utilisant un algorithme d'optimisation évolutive pour tous les latences possibles, maximant ainsi la probabilité que le pair entrant est capable de télécharger le contenu des données demandé d'un sélectionné de la pluralité des pairs choisis au hasard ayant une latence inférieure à celle déterminée pour le pair entrant.

9.  Un dispositif pour arranger des pairs dans un réseau P2P comprenant une source de transmission et une pluralité de pairs, le dispositif étant **caractérisé en ce qu'**il comprend :

une unité de traitement ; et
une interface de communication, dans lequel

ladite interface de communication étant disposée pour recevoir une demande d'un pair entrant le réseau pour recevoir de contenu des données ;

ladite unité de traitement étant disposée pour déterminer par rapport à un point de play-back en temps réel du contenu de données distribués par la source transmission, une latence avec laquelle le pair entrant est de recevoir le contenu des données à partir d'une distribution de probabilité déterminée pour les latences avec lesquelles les pairs du réseau reçoivent le contenu des données distribué par la source de transmission ; et

ladite interface de communication étant disposée pour fournir le pair entrant avec une pluralité des pairs choisis au hasard desquels le contenu des données demandé peut être télécharger avec une probabilité attendue en fonction de la latence déterminée et la capacité de bande passante de la pluralité des pairs choisis au hasard, dans lequel le pair entrant est permis de télécharger, avec la probabilité attendue, la contenu des données demandé à partir d'un sélectionné de ladite pluralité de pairs choisis au hasard ayant une latence inférieure à celle déterminée pour le pair entrant.

10.  Le dispositif selon la revendication 9, ladite unité de traitement de plus étant disposée de déterminer la latence pour le pair entrant par :

déterminer la probabilité qu'aucun de la pluralité des pairs choisis au hasard aura une temps de latence inférieure à celle déterminée pour le pair entrant en formulant une expérience binomiale, où zéro réussites sont définies dans un nombre d'essais égal au nombre de pairs choisis au hasard ; et

déterminer la probabilité qu'au moins un de la pluralité de pairs choisis au hasard a une latence, par rapport à un point de play-back en temps réel du contenu de données distribués par la source de transmission, qui est inférieure qu'à celle déterminée pour le pair entrant, en soustrayant de 11a probabilité qu'aucun de la pluralité des pairs choisis au hasard aura une latence inférieure à celle déterminée pour le pair entrant.

11. Le dispositif selon la revendication 9, ladite unité de traitement étant disposée pour déterminer la probabilité que le pair entrant est capable de télécharger le contenu de données demandé d'un sélectionné de la pluralité de pairs choisis au hasard est déterminée comme le produit de :

la probabilité que le pair entrant fait un téléchargement de contenu réussi d'un sélectionné de la pluralité de pairs choisis au hasard, qui est déterminée en calculant le rapport entre un nombre attendu de réponses réussies et un nombre total de demandes de téléchargement des pairs du réseau ; et

la probabilité qu'au moins un de la pluralité des pairs choisis au hasard a une latence qui est inférieure à celle déterminée pour le pair entrant et qu'une demande de téléchargement ira à l'un quelconque desdits pairs ayant une latence inférieure à celle déterminée pour le pair entrant.

12. Le dispositif l'une des revendications 9 à 11, ladite unité de traitement étant disposé pour tenir en compte la capacité de bande passante de la pluralité des pairs choisis au hasard par:

modeler la latence et capacité de la bande passante de la pluralité des pairs choisis au hasard comme variables de probabilité conjointe ; et la probabilité que le pair entrant est capable de télécharger le contenu des données demandé d'un sélectionné de la pluralité des pairs choisis au hasard est déterminée sur la base de la probabilité conjointe de la latence et la capacité de bande passante.

13. Le dispositif selon la revendication 12, dans lequel l'unité de traitement est disposée pour déterminer la probabilité que le pair entrant est capable de télécharger le contenu des données demandé d'un sélectionné de la pluralité des pairs choisis au hasard est déterminée comme le produit de :

la probabilité que le pair entrant fait un téléchargement de contenu des données réussi d'un sélectionné de la pluralité des pairs choisis au hasard ayant une capacité de téléchargement vers l'amont particulière de la pluralité des capacités de téléchargement vers l'amont possible, qui est déterminée en calculant le rapport entre un nombre attendu de réponses réussies et un nombre total de demandes de téléchargement des pairs du réseau ; et

la probabilité qu'au moins un de la pluralité des pairs choisis au hasard a une latence qui est inférieure à celle déterminée pour le pair entrant et qu'une demande de téléchargement ira à une quelconque desdits au moins un pairs ayant une latence inférieure à celle déterminée pour le pair entrant.

14. Le dispositif selon l'une des revendications 9-13, ladite unité de traitement étant disposée pour déterminer la latence pour le pair entrant par :

déterminer d'une distribution de probabilité pour les latences avec lesquelles les pairs du réseau reçoivent contenu des données distribué par la source de transmission ; et

optimiser d'un paramètre de ladite distribution de probabilité en utilisant un algorithme d'optimisation évolutive pour tous les latences possibles, maximant ainsi la probabilité que le pair entrant est capable de télécharger le contenu des données demandé d'un sélectionné de la pluralité des pairs choisis au hasard ayant une latence inférieure à celle déterminée pour le pair entrant.

15. Un produit de programme informatique comprenant des composants exécutables par ordinateur pour amener le dispositif à effectuer les étapes selon l'une des revendications 1 à 8, quand les composants exécutables par ordinateur sont exécutés sur une unité de traitement inclus dans le dispositif.

Figure 1

Figure 2a

Figure 2b

Figure 3

Figure 4

Figure 5

Figure 6

Figure 7

Figure 8